Europäisches Patentamt

(19) European Patent Office

Office européen des brevets

(11) Numéro de publication: **0 133 139**
**B1**

(12) # FASCICULE DE BREVET EUROPÉEN

(45) Date de publication du fascicule du brevet:
10.05.89

(51) Int. Cl.⁴: **H 04 L 11/12,** H 04 L 11/16

(21) Numéro de dépôt: **84401620.4**

(22) Date de dépôt: **02.08.84**

(54) outil d'aide à l'exploitation de systèmes de communication de données sur réseau local et système incorporant un tel outil.

(30) Priorité: **02.08.83 FR 8312723**

(43) Date de publication de la demande:
**13.02.85 Bulletin 85/7**

(45) Mention de la délivrance du brevet:
**10.05.89 Bulletin 89/19**

(84) Etats contractants désignés:
**AT BE CH DE GB IT LI LU NL SE**

(56) Documents cité:
**MICROPROCESSORS AND MICROSYSTEMS, vol. 6, no. 8, octobre 1982, pages 405-412, Butterworth & Co. (Publishers) Ltd., Guildford, GB; R. CRANE: "Ethernet designer's guide"**
**IEEE TRANSACTIONS ON COMPUTERS, vol. C-31, no. 8, août 1982, pages 723-729, IEEE, New York, US; P.D. AMER: "A measurement center for the NBS local area computer network"**
**COMPCON 83, 26th IEEE COMPUTER SOCIETY INTERNATIONAL CONFERENCE, 28 février - 3 mars 1983, San Francisco, pages 510-517, IEEE, New York, US; M. STARK et al.: "A high functionality VLSI LAN controller for CSMA/CD network"**
**ELECTRONIC DESIGN, vol. 31, no. 3, février 1983, pages 91-99, Waseca, MN., Denville, N.J. US; R. ALLAN: "Data-comm testers take to the field"**

(73) Titulaire: **ELECTRICITE DE FRANCE Service National, 2, rue Louis Murat, F-75008 Paris (FR)**

(72) Inventeur: **Phan, Chi Cao Son, 29, rue Boussingault, F-75013 Paris (FR)**

(74) Mandataire: **Fort, Jacques, CABINET PLASSERAUD 84, rue d'Amsterdam, F-75009 Paris (FR)**

**Description**

L'invention concerne les systèmes de communication de données sur réseau local du type comportant une ligne bus de transmission série à laquelle sont couplés, en des points espacés, plusieurs dispositifs de traitement de données, tels que des calculateurs. Elle a plus particulièrement pour objet un outil permettant une meilleure exploitation de tels systèmes.

L'invention est susceptible de s'appliquer à de nombreux systèmes du type ci-dessus défini dans lesquels l'accès par les différentes stations est aléatoire (et non pas limité à des tranches de temps affectées chacune à une station déterminée). En contrepartie de leur capacité de transfert accrue, les systèmes de ce genre présentent des problèmes dont, notamment, celui des collisions susceptibles d'intervenir entre messages lorsque deux stations tentent simultanément d'émettre vers le bus. On a déjà proposé diverses solutions pour surmonter ce problème. Une première approche consiste à éviter les collisions. Pour cela, on peut par exemple utiliser l'approche décrite dans le brevet US-3 445 822 (Driscoll): la station qui a un message à émettre sur le bus génère un code de saisie et compare le code présent sur le bus à un code prédéterminé pour vérifier si le bus est disponible. La non coïncidence des deux codes indique à la station qu'une autre station tente d'émettre sur le bus et que le message doit rester en attente jusqu'à ce qu'une nouvelle émission du code prédéterminé donne lieu à une coïncidence. Cette solution diminue évidemment le rendement du système puisque l'utilisation du bus est retardée. Une autre solution, notamment utilisée dans le système désigné par la marque "ETHERNET" tolère la présence de collisions: après vérification de l'état du bus, chaque station peut immédiatement émettre si elle constate que le bus n'est pas occupé. Une collision éventuelle avec un autre message est détectée et une retransmission alors entreprise, après exécution d'un algorithme de traitement de collision. La détection d'une collision est effectuée dans chaque émetteur-récepteur (plus couramment désigné par le terme anglo-saxon "transceiver") par un détecteur d'interférence qui surveille le bus et compare le message effectivement présent sur le bus au message que la station est supposée transmettre. Toute différence entre les éléments binaires indique une collision. Les stations qui émettent aggravent cette collision en maintenant leur émission un certain temps, de façon à ce que toutes les autres stations branchées au réseau reçoivent par l'intermédiaire de leur émetteur-récepteur ce signal de collision et puissent ainsi différer leur éventuelle émission d'information. La solution la plus fréquente consiste alors à retransmettre le message au bout d'un intervalle de temps déterminé de façon aléatoire après une collision et ce pour toute station appelée à émettre.

Dans les deux cas, mais surtout dans le second, il est souhaitable de pouvoir vérifier le bon fonctionnement des moyens destinés à éviter les collisions ou à modifier la procédure de transmission lorsqu'une collision existe. La solution habituellement utilisée à l'heure actuelle consiste à créer des pseudo-collisions, en désadaptant la ligne bus lorsque cette ligne bus est constituée par un câble coaxial, ce qui est le cas le plus fréquent. Il suffit pour cela de démonter une charge terminale d'adaptation comme enseigné par exemple dans "Ethernet designer's guide" Microprocessors and Microsystems, vol 6, n° 8, Oct. 1982, Butterworth & Co (Publishers) Ltd., p. 405 - 412. Cette solution présente l'inconvénient de ne donner aucun contrôle sur le nombre des pseudo-collisions ainsi induites. Une autre solution consiste à augmenter le nombre des stations émettrices sur le bus. Mais ce procédé, lourd et coûteux du fait de l'importance du matériel supplémentaire qu'il exige, donne un résultat incertain et non maîtrisable.

L'invention vise à fournir un outil d'aide à l'exploitation des systèmes du type ci-dessus défini permettant de réaliser des conditions simulant les collisions pour vérifier le fonctionnement des moyens qui les gèrent dans 2 stations normales, et pouvant être adapté à des simulations représentatives des diverses conditions de trafic pouvant intervenir, pour vérifier le fonctionnement d'autres éléments composant lesdits systèmes.

Dans ce but, l'invention propose notamment un outil pour système de communication de données conforme à la revendication 1.

Un tel outil permet notamment de vérifier toutes les couches de logiciel appelées à gérer le protocole mis en oeuvre sur le réseau et les applications et à vérifier le fonctionnement des organes gérant les collisions, notamment dans les équipements émetteurs-récepteurs et répéteurs.

Pour permettre la vérification dans des conditions de fonctionnement très diversifiées, l'outil peut être prévu pour avoir divers modes de fonctionnement. En particulier, l'outil peut être prévu pour émettre un train d'informations binaires de longueur réglable sur la ligne bus soit dès réception des premiers éléments binaires d'une trame provenant d'une station courante, soit au contraire uniquement au bout d'une constante de temps réglable, par exemple jusqu'à quelques millisecondes. Mais l'outil peut être prévu pour n'émettre qu'une trame pour un nombre prédéterminé n de trames reçu, avec une longueur et/ou un déphasage réglables. Il peut également être prévu pour permettre, à la demande, de réaliser une émission asynchrone permanente ou aléatoire de trames de longueur réglable, indépendamment de la présence ou de l'absence informations sur la ligne bus.

Le même outil ou un outil similaire monté sur la même ligne bus peut être utilisé pour simuler non plus des collisions, mais un trafic de nature et d'intensité programmables, par exemple afin de vérifier la conformité du réseau aux normes d'utilisation. L'outil comporte alors avantageusement des moyens permettant d'afficher des statistiques effectuées sur le trafic engendré et la réponse du réseau.

En particulier, l'invention propose également un outil de simulation du trafic sur le réseau utilisable sur un système de communication de données sur réseau local du type comportant une ligne de transmission en série à laquelle sont couplées, en des points espacés, plusieurs stations de traitement de données, caractérisé en ce

2

qu'il comporte un coupleur et un ensemble processeur programmé pour permettre l'enregistrement de différents profils de trafic et pour placer sur la ligne bus du réseau le trafic simulé ainsi pré-enregistré.

L'invention sera mieux comprise à la lecture de la description qui suit de modes particuliers de réalisation, donnés à titre d'exemples non limitatifs. La description se réfère aux dessins qui l'accompagnent, dans lesquels:

- La Figure 1 est un schéma de principe montrant le mode de branchement de stations et d'un outil dans un système de transmission de données à réseau local, tel que le réseau "ETHERNET",
- la Figure 2 indique le format des paquets d'informations généralement transmis sur un réseau du genre montré en Figure 1,
- la Figure 3 est un schéma synoptique montrant une constitution possible d'un outil de simulation des collisions sur un réseau du genre montré en Figure 1,
- la figure 4 est un schéma fonctionnel de l'outil de simulation de trafic,
- les Figures 5 et 6 sont des schémas d'automates susceptibles de remplir les fonctions de simulation de trafic et de surveillance de trafic.

Avant de décrire l'invention, il peut être utile de rappeler quelques données sur la constitution d'un système de communication de données du type "ETHERNET" et sur le format des messages échangés, étant bien entendu que l'invention est susceptible de s'appliquer à d'autres systèmes.

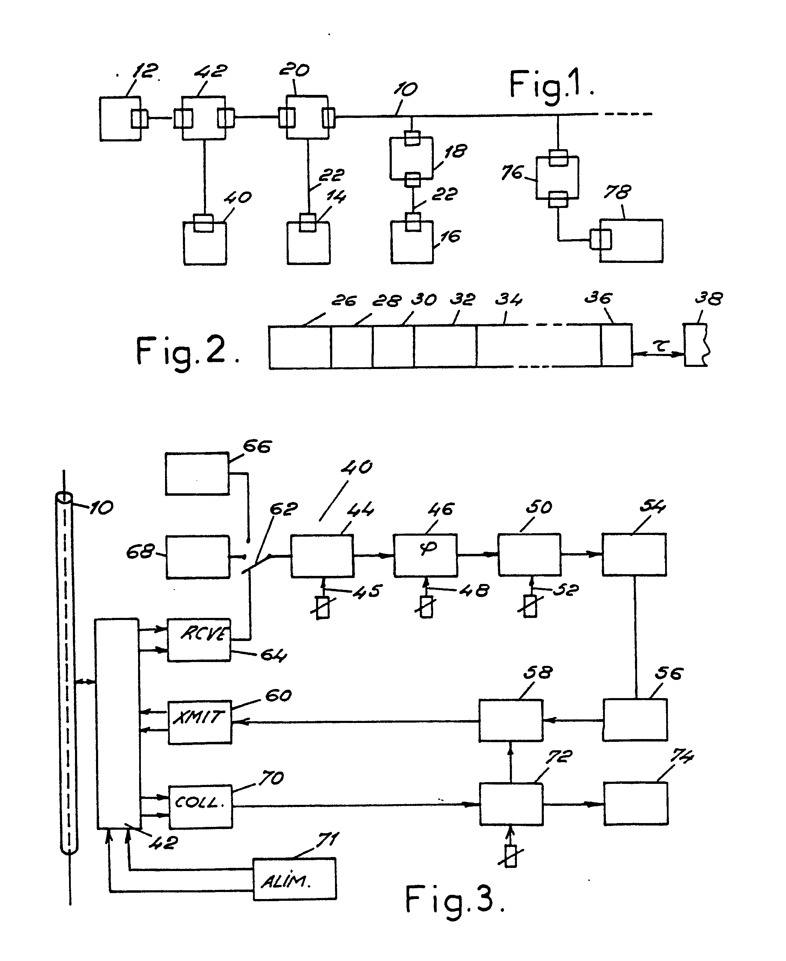

Le réseau montré en Figure 1 comporte une ligne bus 10 constituée par un câble coaxial terminé par des charges d'adaptation dont une seule, 12, est représentée. Le câble peut être en plusieurs tronçons reliés par des connecteurs. Des stations telles que 14 et 16 sont réparties le long du câble à intervalles suffisants pour éviter la formation d'ondes stationnaires sur le tronçon compris entre deux stations. Chaque station 14 ou 16 est reliée au câble coaxial par l'intermédiaire d'un émetteur-récepteur qui peut être monté en dérivation (émetteur-récepteur 18 sur la Fig 1) ou en interruption (émetteur-récepteur 20). Entre l'émetteur-récepteur et la station est placée une liaison, généralement constituée par des paires torsadées 22, munie de connecteurs. La station elle-même comporte un coupleur, une unité centrale (processeur ou calculateur) et des éléments d'entrée-sortie.

Le réseau utilise en règle générale la transmission par paquets ou trames ayant chacun la constitution montrée en Figure 2. Chaque paquet 24 comprend un préambule de synchronisation 26, une adresse de destination 28, une adressé de source 30 représentative de la station d'émission et un code 32 d'identification du protocole de haut niveau utilisé, de longueurs fixes. Le paquet comprend ensuite une zone de données 34 de longueur variable entre deux bornes (par exemple entre 46 et 1500 octets) et un code de redondance 36 permettant la détection d'erreur. Deux paquets successifs tels que 24 et 38 doivent être séparés par un intervalle minimal $\tau$, de 9,6 $\mu$s dans le cas d'un réseau "ETHERNET".

Les outils proposés par l'invention sont couplés à la ligne bus de la même façon que les stations normales 14 et 16. Sur la Figure 1 a été représenté un outil 40 de simulation de collision, branché sur la ligne bus 10 par un émetteur-récepteur 42 monté en interruption (mais pouvant être en dérivation). Si l'outil 40 doit permettre de simuler toutes les formes possibles de collisions, il peut avoir la constitution montrée sur le synoptique de la Figure 3. A ce sujet, on notera que l'invention met en oeuvre une combinaison de moyens informatiques et de communication qui sont en eux-mêmes connus et qu'en conséquence, d'une part, il n'est pas nécessaire de donner une description complète de chacun des éléments et, d'autre part, ces éléments peuvent prendre des formes très diverses.

L'outil dont le synoptique est donné en Figure 3 comporte une branche de détection d'apparition d'éléments binaires ou "bits" dûs à des trames placées sur la ligne coaxiale 10 par d'autres stations. Cette branche comporte un circuit 44 de détection d'enveloppe et de comptage, éventuellement programmable sur une entrée 45, qui attaque un circuit 46 permettant le réglage du déphasage avant émission d'une trame de collision, déphasage réglable sur une entrée 48. Le circuit 46 est suivi d'un circuit 50 de choix de longueur de trame à l'aide d'une entrée 52. Enfin, les données ainsi déterminées sont fournies à un générateur de trames binaires 54 qui attaque, par l'intermédiaire d'un circuit de mise en forme 56 et d'une porte 58, l'émetteur 60 vers l'émetteur-récepteur.

Cette chaîne est susceptible d'être reliée, par des moyens de sélection représentés sous forme d'un commutateur 62, soit à un récepteur 64 relié à l'émetteur-récepteur 42, soit à un générateur cyclique de données binaires 66, soit encore à un générateur 68 fournissant des salves de données binaires suivant un mode aléatoire, mais éventuellement avec des caractéristiques ajustables. Le détecteur de collision 70, en liaison avec l'émetteur-récepteur 42, attaque un compteur de collisions 72 qui, au bout d'un nombre de collisions déterminé et éventuellement ajustable, bloque la porte 58 et commande un afficheur 74.

Une source de tension 71 de 12 V permet d'alimenter correctement l'émetteur-récepteur 42.

Un tel outil permet de simuler des modes de collision extrêmement divers:

- Brouillage intégral: le détecteur d'enveloppe (compteur programmable) 44 est relié au récepteur 64 et l'organe 58 est déconnecté. La station, ou les stations, à vérifier, branchée(s) sur la ligne 10, émet(tent) une ou plusieurs trames d'informations binaires sur la ligne. Dès réception des premiers bits de trame par le récepteur 64, ce dernier provoque l'émission, par 44, 50, 54, 56 et 60, d'un train d'informations binaires de longueur préajustée vers la ligne 10, à la rencontre de la trame d'informations qui provient d'une autre station. Une collision se produit. Elle est détectée par le détecteur de collision 70 et transmise par 72 à l'afficheur 74, qui

EP 0 133 139 B1

fournit un affichage lumineux, constitué par exemple par un afficheur décimal donnant le nombre de collisions, ou sonore.

- Emission à déphasage réglable: dans ce cas, on utilise les mêmes organes que dans le cas du brouillage intégral, plus le déphaseur 46. La seule différence avec le fonctionnement précédent est qu'il n'y a émission d'un train d'informations binaires de longueur réglable vers la ligne 10 qu'au bout d'une constante de temps, après réception du premier bit de trame par le récepteur 64.

- Emission espacées: Une seule trame doit être émise pour un nombre entier m de trames reçues. Pour cela, tous les composants sont utilisés, exception faite des composants 66 et 68 puisque le détecteur d'enveloppe et compteur 44 reste branché sur le récepteur 64. Le déphasage par rapport aux bits de la trame reçue, provenant d'une station à vérifier, reste réglable à l'aide du déphaseur 46.

- Emission asynchrone cyclique: Dans ce cas, le détecteur 44 est relié au générateur cyclique 66 et le déphaseur 46 n'est pas indispensable. Il y a émission cyclique de trames de longueur réglable, indépendamment de la présence ou de l'absence de trame placée sur la ligne par d'autres stations.

- Emission asynchrone aléatoire: La seule différence par rapport aux cas précédents est que le détecteur d'enveloppe 44 est relié au générateur aléatoire 68, et non plus au générateur cyclique 66.

L'outil permet ainsi de vérifier les protocoles de reprise en cas de collision sur la ligne, ainsi que les composants du réseau et, en particulier, leurs dispositifs de gestion des collisions.

L'outil de simulation de collision est susceptible de réalisations matérielles très diverses qu'il n'est pas nécessaire de donner en détail étant donné que des composants capables de réaliser les fonctions indiquées plus haut sont disponibles.

On peut toutefois indiquer que le générateur d'émission cyclique 66 peut être constitué par un monostable déclenché par un oscillateur à fréquence fixe ou ajustable compatible avec la durée d'une trame individuelle. La durée de maintien du monostable sera par exemple de 50 ms sur un réseau ETHERNET.

Le générateur d'émission aléatoire 68 peut comporter, lui aussi, un monostable, mais être déclenché par un bruit numérique, élaboré à partir d'une diode Zener ou d'un registre à décalage.

Le circuit 44 de détection d'enveloppe, destiné à compter les enveloppes de trames reçues, peut être formé par un monostable redéclenchable de durée de maintien supérieure à la durée de codage d'un élément de trame (150 ns dans le cas d'ETHERNET) et par un décompteur préchargeable à un contenu ajustable: ce circuit fournit ainsi un signal lors du passage à zéro du décompteur, après passage d'un nombre de trames déterminé.

Le générateur de trames 54 et son circuit de mise en forme seront généralement prévus pour fournir une trame de longueur réglable en codage Manchester. Pour cela, ils peuvent comporter un monostable et des bascules JK, ou une mémoire préprogrammée et des circuits de codage Manchester.

Enfin, le compteur 72 et le dispositif d'affichage destinés à indiquer le déphasage, la longueur et le nombre de trames sont en composants classiques tels que compteur, monostable, roues codeuses et diodes ELM et/ou pavés décimaux.

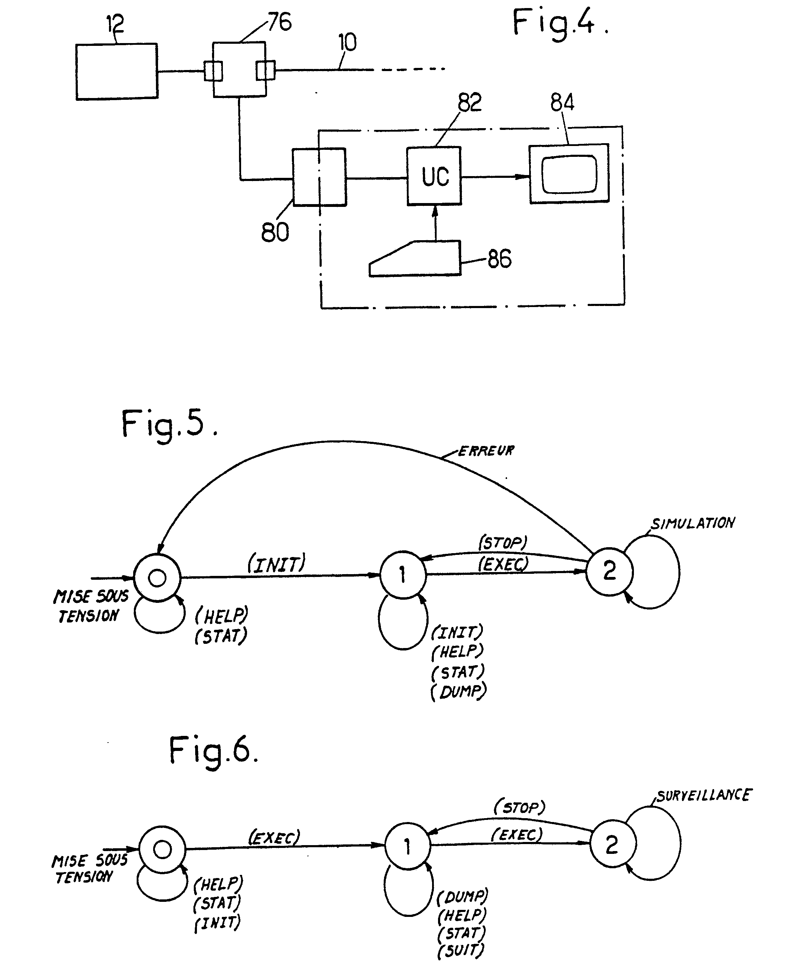

La vérification d'un détecteur de collision intégré à un émetteur-récepteur du type 18 ou 20 peut s'effectuer en associant cet émetteur-récepteur 76 non pas à une station normale, ce qui supposerait le réseau en service, mais à un simulateur de trafic 78, comme le montre la Figure 1. L'outil de simulation du trafic (Figure 4) comportera encore un coupleur approprié 80 et un ensemble processeur constitué d'une unité centrale 82 munie de mémoires, d'une unité de sortie (imprimante ou écran 84) et d'un clavier d'entrée 86. La mise en oeuvre de cet outil impliquera, dans une première phase, la description des profils de trafic à simuler qui seront mémorisés dans l'unité centrale. Au cours de la phase de fonctionnement effectif, éventuellement en coopération avec l'outil de simulation de collision, le trafic sera simulé par émission de trames à une cadence prédéterminée et réception des trames provenant d'autres origines. Enfin, les statistiques du trafic engendré pourront être affichées ou enregistrées de façon permanente. La simulation du trafic pourra prendre en compte les paramètres du système réel à réaliser, tels que spécialisation des stations (maître ou esclave), nombre de stations esclaves actives et adresse active de ces stations, mode de transaction, temps moyen entre les trames, nombre de trames, longueur des données, etc.

L'organisation interne du simulateur de trafic pourra être prévue pour qu'il présente trois états de fonctionnement possibles, qu'on peut définir comme les états 0, 1 et 2 d'un automate (Figure 5).

Etat zéro: L'outil se trouve dans son état zéro lorsqu'il est mis sous tension. Il sera alors prévu pour que l'opérateur puisse disposer au moins d'une commande d'initialisation, d'une commande d'aide à la poursuite de l'exploitation et d'une commande d'affichage.

Le logiciel de l'outil est avantageusement prévu pour que l'ensemble des commandes autorisées s'affiche ou s'imprime automatiquement dès la mise sous tension de l'outil et cycliquement, par exemple sous la forme:

<ETAT 0> Commandes permises /HELP/ /STAT/ /INIT/

La commande /HELP/ provoquera l'affichage ou l'impression d'un guide indiquant à l'opérateur les commandes dont il dispose dans chaque état de fonctionnement et les opérations effectuées en réponse à ces commandes, par exemple sous la forme suivante:

Assistance opérateur

Le présent outil permet de simuler le trafic sur le réseau ETNERNET.

4

On dispose des commandes suivantes:

/HELP/....     aide opérateur
/STOP/....     arrêt d'une transaction
/STAT/....     affichage des statistiques
/DUMP/....    visualisation dds trames
/INIT/....      initialisation des trames (indication des trames dont la visualisation est souhaitée)

L'automate possède trois états de fonctionnement:

<ETAT 0> Commandes permises: /HELP/ /STAT/ /INIT/
<ETAT 1> Commandes permises: /DUMP/ /STAT/ /HELP/ /EXEC/ /INIT/
<ETAT 2> Commande permise: /STOP/

L'organisation interne de l'outil sera généralement celle montrée en Figure 5 qui expose les différents états de l'automate. Le trafic à simuler une fois défini par /INIT/ alors que l'outil est dans l'état 1, l'ordre /EXEC/ provoque l'exécution de la simulation proprement dite. Une erreur de communication ramène l'outil dans l'état 0. La commande /STOP/ le ramène dans l'état 1, ce qui autorise l'affichage des statistiques obtenues par la commande /STAT/ ainsi que la visualisation du contenu des dernières trames échangées.

Un outil du même type que celui qui vient d'être décrit pour simuler le trafic peut être programmé de façon à assurer la surveillance du système. En associant, sur une même ligne, des outils de surveillance du trafic, de simulation du trafic et de simulation de collision, on peut réaliser un ensemble autorisant l'enseignement, le dépannage des composants, permettant de qualifier des composants tels que des coupleurs, etc.

L'outil de surveillance du trafic se différenciera essentiellement de l'outil de simulation du trafic par les fonctions qu'il assure et les commandes qui peuvent être les suivantes, telles qu'elles apparaissent sur l'écran ou l'imprimante en réponse à l'ordre /HELP/ alors que l'outil est dans l'état 0:

Assistance Opérateur

Le présent outil permet d'analyser les échanges et la structure des trames du réseau ETHERNET.
On dispose des commandes suivantes:

/HELP/...     aide opérateur
/EXEC/...     exécution de l'enregistrement
/STOP/...     arrêt d'une transaction
/STAT/...     affichage des statistiques
/DUMP/...   visualisation des trames
/INIT/...      initialisation des paramètres d'enregistrement

L'automate possède trois états de fonctionnement:

<ETAT 0> Commandes permises /HELP/ /STAT/ /EXEC/ /INIT/
<ETAT 1> Commandes permises: /DUMP/ /STAT/ /HELP/ /EXEC/
<ETAT 2> Commande permise: /STOP/

L'organisation interne de l'outil peut alors être celle montrée en Figure 6, où l'on voit apparaître les états 0, 1 ou 2 de l'automate.
Le procédé mis en oeuvre comportera encore, comme dans le cas précédent, des phases:
- Phase 1: Réception du format de l'enregistrement, des symboles affectés aux différents champs, longueur et nature des champs, fenêtre d'enregistrement (qu'on pourra choisir soit à partir du début de la trame, soit à partir d'un champ déterminé dans la trame).
- Phase 2: Exécution des opérations d'enregistrement.
- Phase 3: Affichage du contenu enregistré.

L'outil de surveillance du système qui vient d'être décrit peut également être utilisé indépendamment des autres outils sur un réseau existant pour observer et contrôler le trafic échangé entre stations normales. Toutes les informations échangées entre stations peuvent alors être consignées et, notamment en période de mise en service, permettre la validation des protocoles et des logiciels.
A titre d'exemple, on donnera maintenant un exemple des affichages qui interviennent en réponse à divers ordres lors de la mise en oeuvre de l'outil de surveillance du trafic.
Dans l'état 1 de l'automate, l'ordre /STAT/ va faire apparaître sur l'écran les indications statistiques obtenues à partir des données qui ont transité par la mémoire organisée en file d'attente FIFO que comporte le coupleur ETHERNET. On obtiendra par exemple:

5

Statistiques de la station dont l'adresse est        02070100050C
compteur de trames reçues                               #c# R1     0
compteur de trames reçues dans la fifo du coupleur       #c# R2     0
compteur de résidus de collisions                       #c# R3     0
compteur de pertes de trames par débordement de fifo     #c# R4     0
nombre de pertes de trames par débordement de fifo   L  #s# R5     0
compteur d'erreurs d'alignement                         #c# R6     0
nombre d'erreurs d'alignement                 A  #s# R7     0
compteur de trames reçues avec erreur de CRC        #c# R8     0
nombre de trames reçues avec erreur de CRC     C  #s# R9     0
nombre de trames multicast acceptées                #c# R10    0
nombre de trames multicast rejetées                  #c# R11    0
      Copie ? (Taper O/N)                                   0

Dans ce tableau, les abréviations ont leur sens habituel:

Multicast: adresse de groupe
CRC: code de redondance cyclique (dernier champ de la trame)
FIFO: file d'attente premier entré-premier sorti

L'affectation des champs s'effectue en réponse à l'ordre /INIT/ qui fait par exemple apparaître:

No. 01234567890123456789012345678901234567890123456789012345678901234567
No. WORH/WORD/BYTH/BYTD/BYTA/DATA.......................................

WORH/       Zone WORD＿HEXA
WORD/       Zone WORD＿DECIMAL(1)
BYTH/        Zone BYTE＿HEXA
BYTD/        Zone BYTE＿DECIMAL
BYTA/        Zone BYTE＿ASCII
DATA.........................../                              Zone BYTE＿HEXA
      OK ? (O/N)
      Affichage des trames reçues (O/N)

L'opérateur peut, en réponse à cet affichage, effectuer les modifications souhaitées par lui.

La commande /DUMP/ permettra de faire apparaître les trames sur l'écran de visualisation; une instruction pourra être prévue pour provoquer l'affichage avec ou sans indication des champs. Dans le premier cas, on aura, dans un exemple particulier où l'opérateur a choisi d'effectuer la visualisation à partir de la première trame en réponse à la demande qui apparaît sur l'écran:

                   A partir de la trame No 0001 ? (O/N)

| No. | WORH | WORD | BYTH | BYTD | BYTA | DATA............................................ |
|-----|------|------|------|------|------|------|
| 1 | 0950 | 512 | 4000 | 1 0 | ?.?. | BBBBA5A5A5A5A5A5A5A5A5A5A5A5A5A5A5A |
| 2 | 0950 | 512 | 4000 | 2 0 | ?.?. | BBBBA5A5A5A5A5A5A5A5A5A5A5A5A5A5A5A |
| 3 | 0950 | 512 | 4000 | 3 0 | ?.?. | BBBBA5A5A5A5A5A5A5A5A5A5A5A5A5A5A5A |
| 4 | 0950 | 512 | 4000 | 4 0 | ?.?. | BBBBA5A5A5A5A5A5A5A5A5A5A5A5A5A5A5A |
| 5 | 0950 | 512 | 4000 | 5 0 | ?.?. | BBBBA5A5A5A5A5A5A5A5A5A5A5A5A5A5A5A |
| 6 | 0950 | 512 | 4000 | 6 0 | ?.?. | BBBBA5A5A5A5A5A5A5A5A5A5A5A5A5A5A5A |
| 7 | 0950 | 512 | 4000 | 7 0 | ?.?. | BBBBA5A5A5A5A5A5A5A5A5A5A5A5A5A5A5A |
| 8 | 0950 | 512 | 4000 | 8 0 | ?.?. | BBBBA5A5A5A5A5A5A5A5A5A5A5A5A5A5A5A |
| 9 | 0950 | 512 | 4000 | 9 0 | ?.?. | BBBBA5A5A5A5A5A5A5A5A5A5A5A5A5A5A5A |
| 10 | 0950 | 512 | 4000 | 10 0 | ?.?. | BBBBA5A5A5A5A5A5A5A5A5A5A5A5A5A5A5A |

                  Taper: S (Suite) *Debut tampon* E(Exit)
E

Dans le second cas, et lorsque l'opérateur demande la visualisation à partir de la trame 113, on aura par exemple:

                   A partir de la trame No 0001 ? (O/N)
N                 A partir de la trame No 0000 < N < 2088 : 0113

6

| No. | Lg. | Contenu de trame |
|-----|-----|------------------|
| 113 | 74 | 5009020014000100BBBBBBBBB0F0F0F0F0F0F0F0F0F0F0F0F0F0F0F0F0F0F0F<br>BBBBBBBBBBBBBBBBBBBBBBBBBBBBBBBBBBBBBBBBBBB8EECA8B2A5 |
| 114 | 74 | 5009020014000200BBBBBBBBB0F0F0F0F0F0F0F0F0F0F0F0F0F0F0F0F0F0F0F<br>BBBBBBBBBBBBBBBBBBBBBBBBBBBBBBBBBBBBBBBBBBB99E8FD08A5 |
| 115 | 74 | 5009020014000300BBBBBBBBB0F0F0F0F0F0F0F0F0F0F0F0F0F0F0F0F0F0F0F<br>BBBBBBBBBBBBBBBBBBBBBBBBBBBBBBBBBBBBBBBBBBB94143161A5 |
| 116 | 74 | 5009020014000400BBBBBBBBB0F0F0F0F0F0F0F0F0F0F0F0F0F0F0F0F0F0F0F<br>BBBBBBBBBBBBBBBBBBBBBBBBBBBBBBBBBBBBBBBBBBBF6E626A7A5 |
| 117 | 74 | 5009020014000500BBBBBBBBB0F0F0F0F0F0F0F0F0F0F0F0F0F0F0F0F0F0F0F<br>BBBBBBBBBBBBBBBBBBBBBBBBBBBBBBBBBBBBBBBBBBBFB1AEACEA5 |

Taper : S(Suite) P(Precedent) E(Exit)

E

On voit qu'on peut ainsi obtenir toutes les indications requises pour avoir un tableau complet de synthèse du fonctionnement.

L'ensemble des outils qui ont été décrits permet des configurations très diverses s'adaptant à tout résultat souhaité. Par exemple, on constitue, en associant des outils de simulation du trafic et de simulation de collisions, un ensemble de test et de dépannage extrêmement puissant.

En associant les trois outils ci-dessus définis sur un réseau local, on constitue un ensemble utilisable pour l'enseignement, le dépannage ou la qualification de composants, l'analyse du trafic.

Il serait superflu de donner ici le détail des programmes car leur écriture découle directement des fonctions remplies par les outils, telles que définies plus haut et, au surplus, leur formulation dépendra du langage utilisé.

## Revendications

1. Outil d'aide à l'évaluation d'un système de communication de données sur réseau local comportant une ligne de transmission en série à laquelle sont couplées, en des points espacés, plusieurs stations de traitement de données, par vérification du fonctionnement des moyens gérant les collisions dans les stations, ledit outil comportant un émetteur-récepteur destiné à être relié à la ligne bus (10), et comportant un dispositif de détection des collisions (70) et un coupleur, caractérisé en ce qu'il comprend en outre des moyens (64, 44, 46, 50, 54, 56, 58, 60) permettant de générer des trames d'information de longueur réglable sur la ligne bus en réponse à la détection de la présence d'informations sur la ligne bus, lesdits moyens de génération étant prévus pour émettre une trame de collision lorsqu'il a constaté un nombre déterminé de présences.

2. Outil selon la revendication 1, caractérisé en ce qu'il comprend de plus des moyens permettant de générer des trames d'informations de longueur réglable sur la ligne bus (10) de façon cyclique ou aléatoire (66, 68).

3. Outil selon la revendication 1 ou 2, caractérisé en ce qu'il comporte des moyens (44, 45, 72) permettant d'émettre sur la ligne une trame d'informations de longueur réglable pour $\underline{m}$ trames présentes sur la ligne, $\underline{m}$ étant un entier sélectionnable.

4. Outil selon la revendication 1, 2 ou 3, caractérisé en ce qu'il comporte des moyens permettant d'émettre sur la ligne une trame d'informations de longueur réglable dès réception des premiers éléments binaires d'une trame provenant d'une des stations.

5. Système de communication de données sur réseau local comportant au moins un outil suivant l'une quelconque des revendications précédentes et un outil de simulation du trafic sur le réseau (76, 78).

6. Système de communication de données selon la revendication 5, caractérisé en ce que l'outil de simulation comporte un coupleur (80) et un ensemble processeur programmé pour permettre l'enregistrement de différents profils de trafic et pour placer sur la ligne bus du réseau le trafic simulé ainsi pré-enregistré.

7. Système de communication selon la revendication 5 ou 6, caractérisé en ce qu'il comporte de plus un outil de surveillance du trafic sur le réseau.

8. Système de communication selon la revendication 5, 6 ou 7, caractérisé en ce que l'un au moins de l'outil de simulation et de l'outil de surveillance présente au moins trois états de fonctionnement.

9. Système de communication selon la revendication 8, caractérisé en ce que l'outil comporte un état 0 dans lequel il se trouve alors mis sous tension, mettant à la disposition de l'opérateur une commande d'initialisation, une commande d'aide à la poursuite de l'exploitation et une commande d'affichage d'indications statistiques: un état 1 dans lequel il met à la disposition de l'opérateur une commande de visualisation une commande d'aide et une commande d'affichage de trame; et un état 2 dans lequel il met à la disposition de l'opérateur une commande d'arrêt, le passage d'un état à l'autre étant assuré par une commande d'exécution.

## EP 0 133 139 B1

**Patentansprüche**

1. Vorrichtung zur Unterstützung der Auswertung eines Systems zur Datenübertragung auf einem lokalen Netz, umfassend eine Leitung zur seriellen Übertragung, mit der an Punkten mit Abstand mehrere Stationen zur Datenverarbeitung verbunden sind, durch Prüfung der Funktion der die Überschneidung in den Stationen verwaltenden Mittel, wobei die Vorrichtung einen zur Verbindung mit dem Leitungsbus (10) bestimmten Sender-Empfänger umfaßt und eine Vorrichtung zur Erfassung der Überschneidungen (70) und eine Koppeleinrichtung umfaßt, dadurch <u>gekennzeichnet</u>, daß sie außerdem Mittel (64, 44, 46, 50, 54, 56, 58, 60) aufweist, die es gestatten, Informationsraster mit steuerbarer Länge auf dem Leitungsbus ansprechend auf die Erfassung des Vorhandenseins von Informationen auf dem Leitungsbus zu erzeugen, wobei die Erzeugungsmittel vorgesehen sind, um ein Überschneidungsraster auszusenden, wenn eine bestimmte Anzahl von Präsenzen festgestellt worden ist.

2. Vorrichtung nach Anspruch 1, dadurch <u>gekennzeichnet</u>, daß sie außerdem Mittel aufweist, die es gestatten, Informationsraster mit steuerbarer Länge auf dem Leitungsbus (10) auf zyklische oder beliebige Weise (66, 68) zu erzeugen.

3. Vorrichtung nach Anspruch 1 oder 2, dadurch <u>gekennzeichnet</u>, daß sie Mittel (44, 45, 72) umfaßt, die es gestatten, auf der Leitung ein Informationsraster mit steuerbarer Länge für auf der Leitung vorhandene m Raster auszusenden, wobei m eine wählbare ganze Zahl ist.

4. Vorrichtung nach Anspruch 1, 2 oder 3, dadurch <u>gekennzeichnet</u>, daß sie Mittel umfaßt, die es gestatten, auf der Leitung ein Informationsraster mit steuerbarer Länge vom Empfang der ersten binären Elemente eines von einer der Stationen ausgehenden Rasters an auszusenden.

5. System zur Datenübertragung auf einem lokalen Netz, umfassend wenigstens eine Vorrichtung nach einem beliebigen der vorhergehenden Ansprüche und eine Vorrichtung zur Simulation des Verkehrs auf dem Netz (76, 78).

6. System zur Datenübertragung nach Anspruch 5, dadurch <u>gekennzeichnet</u>, daß die Simulationsvorrichtung eine Koppeleinrichtung (80) und eine programmierte Prozessoreinheit umfaßt, um die Aufzeichnung verschiedener Verkehrsprofile zu gestalten und um auf dem Leitungsbus des Netzes den simulierten sowie voraufgezeichneten Verkehr anzuordnen.

7. Übertragungssystem nach Anspruch 5 oder 6, dadurch <u>gekennzeichnet</u>, daß es außerdem eine Vorrichtung zur Überwachung des Verkehrs auf dem Netz umfaßt.

8. Übertragungssystem nach Anspruch 5, 6 oder 7, dadurch <u>gekennzeichnet</u>, daß wenigstens das eine der Simulationsvorrichtung und der Überwachungsvorrichtung wenigstens drei Funktionszustände aufweist.

9. Übertragungssystem nach Anspruch 8, dadurch <u>gekennzeichnet</u>, daß die Vorrichtung umfaßt einen Zustand 0, in dem sie sich nun unter Spannung gesetzt befindet, wobei sie dem Operator einen Initialisierungsbefehl, einen Unterstützungsbefehl für die Bearbeitungsverfolgung und einen Befehl zur Anzeige statistischer Anzeigen zur Verfügung stellt; einen Zustand 1, in dem sie dem Operator einen Anzeigebefehl, einen Unterstützungsbefehl und einen Rasteranzeigebefehl zur Verfügung stellt; und einen Zustand 2, in dem sie dem Operator einen Haltebefehl zur Verfügung stellt, wobei das Durchlaufen eines Zustandes zum anderen durch einen Ausführbefehl sichergestellt ist.

**Claims**

1. A tool for aiding in evaluation of a data communication local area network system comprising a serial transmission line on which are coupled, at points distributed at intervals, a plurality of data processing stations, operating by checking the operation of the means handling collisions in the stations, said tool comprising a transceiver for connection to the bus line (10) and comprising a device for detecting collisions (70) and a coupler, characterized in that it further comprises means (64, 44, 46, 50, 54, 56, 58, 60) for generating data trames having an adjustable length onto the bus line in response to detection of the presence of data on the bus line, said generation means being arranged for delivering a collision trame when it has detected a predetermined number of presences.

2. Tool according to claim 1, characterized in that it further comprises means for generating data trames of adjustable length onto the bus line (10) cyclically or randomly (66, 68).

3. Tool according to claim 1 or 2, characterized in that it comprises means (44, 45, 72) for delivering onto a line an information trame of adjustable length in response to $m$ frames found on the line, $m$ being an integer selectable at will.

4. Tool according to claim 1, 2 or 3, characterized in that it comprises means for delivering an information trame of adjustable length onto the line in response to reception of the first bits of a frame originating from one of the stations.

5. Data communication local area network system, comprising at least a tool according to any one of the preceding claims and a tool for simulating traffic on the network (76, 78).

6. Data communication local area network system according to claim 5,

8

characterized in that the simulation tool comprises a coupler (80) and a processor unit programmed for storing different traffic profiles and for delivering the pre-recorded simulated traffic onto the bus line of the network.

7. Communication system according to claim 5 or 6, characterized in that it further comprises a tool for monitoring the traffic on the network.

8. Communication system according to claim 5, 6 or 7, characterized in that one at least of the simulation tool and monitoring tool has at least three operation states.

9. Communication system according to claim 8, characterized in that the tool comprises a 0 state assumed by it when power is applied thereto, for making available to the operator an initialization control, a control for aided in further operation and a control for display of statistical data; a 1 state in which it makes available to the operator a display control, an aid control and a frame display control; and a 2 state in which it makes available to the operator a stop control, wherein switching from a state to an other state is carried out by a "run" command.

Fig.1.

Fig.2.

Fig.3.

# Fig.4.

# Fig.5.

# Fig.6.